Europäisches Patentamt

European Patent Office

Office européen des brevets

(19)

(11) Numéro de publication : **0 080 910**
**B1**

(12)

# FASCICULE DE BREVET EUROPÉEN

(45) Date de publication du fascicule du brevet :
05.06.85

(51) Int. Cl.⁴ : **F 16 C 32/06**

(21) Numéro de dépôt : 82401823.8

(22) Date de dépôt : 06.10.82

(54) **Palier radial et de butée supporté par un fluide, à surface de portée en forme de cône et procédé de fabrication de celui-ci.**

(30) Priorité : 02.12.81 FR 8122551

(43) Date de publication de la demande :
08.06.83 Bulletin 83/23

(45) Mention de la délivrance du brevet :
05.06.85 Bulletin 85/23

(84) Etats contractants désignés :
BE DE GB IT

(56) Documents cités :
DE-A- 2 352 788
DE-C- 868 811
FR-A- 1 482 348
FR-A- 2 155 328
FR-A- 2 339 125
FR-A- 2 386 367
GB-A- 1 038 888
US-A- 3 043 635

(73) Titulaire : **SOCIETE NOUVELLE DE ROULEMENTS
S.A.**
**Boîte Postale 17 1, rue des Usines
F-74010 Annecy Cedex (FR)**

(72) Inventeur : **Druge, Gérard**
**69, Chemin du Périmètre
F-74000 Annecy (FR)**

(74) Mandataire : **Ernst-Schonberg, Michel et al
RNUR - S. 0804 B.P. 103
F-92109 Boulogne-Billancourt (FR)**

Jouve, 18, rue St-Denis, 75001 Paris, France

## Description

L'invention concerne un palier et un procédé de fabrication d'un tel palier radial et de butée supporté par un fluide, à surface de portée en forme de cône.

On connaît par le brevet français 1 482 348 un palier susceptible d'être réglé en faisant varier les passages de fluide. A cet effet, le palier comprend une enveloppe présentant une surface de portée en forme de cône, un arbre qui présente une tête à surface de portée conique, un disque associé portant une autre portée conique et un moyen fixant d'une façon réglable le disque. Un tel palier permet de maintenir un arbre en position flottante par rapport à une enveloppe et il peut être réglé en faisant varier les passages de fluide.

On connaît par le brevet US 3 043 635 un palier à air dont le fonctionnement ne nécessite pas de source de fluide extérieure.

La portée de l'arbre délimite dans ce cas avec l'enveloppe périphérique des poches d'air dans lesquelles se crée un coussin support de l'arbre au cours de la rotation de celui-ci.

On connaît par la publication DE-A-2 352 788 un palier à air à surface de portée en forme de cône qui possède une bague intérieure de forme biconique montée à rotation dans une bague extérieure de configuration correspondante et dans lequel une butée à billes absorbe les déplacements de la bague intérieure.

Les paliers à air connus nécessitent de ce fait des usinages précis incompatibles à la production en grande série.

Conformément à l'invention, ce problème est résolu par le fait que la bague intérieure d'un seul tenant possède une forme obtenue par déformation dans la bague extérieure d'une douille cylindrique de faible épaisseur dont le coefficient de dilatation est plus grand que celui de la bague extérieure et dont l'effort limite de déformation élastique est inférieur à celui de ladite bague.

Le palier ainsi réalisé possède l'avantage d'être indémontable, ce qui lui confère une précision de fonctionnement constante et un faible coût de fabrication.

D'autres caractéristiques du palier ressortiront de la description de l'exemple de réalisation préférentiel de celui-ci et du meilleur procédé d'obtention, en référence au dessin annexé dans lequel :

la figure 1 représente une coupe axiale du palier,

la figure 2 représente un exemple fonctionnel de montage du palier sur une retordeuse de fil textile,

les figures 3, 4, 5 représentent les différentes étapes de fabrication d'un palier conforme à l'invention.

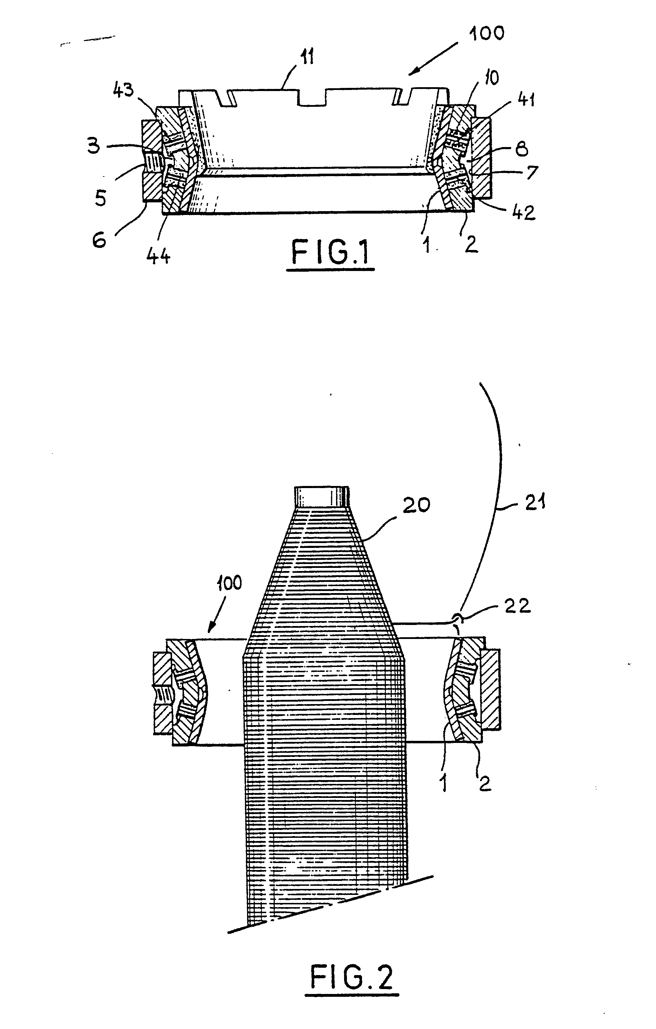

Le palier représenté à la figure 1, désigné dans son ensemble par la référence 100, est composé d'une bague intérieure en alliage léger 1 de forme biconique et d'une bague extérieure 2 également biconique réalisée en acier. La forme biconique des bagues intérieure et extérieure 1, 2 assure la confection de la portée du palier au contact des bagues. Le positionnement axial et radial des pièces constitutives du palier sans éléments de butée axial ou radial additionnels est également assuré.

A titre d'exemple, la bague intérieure 1 est un alliage d'aluminium dont le coefficient de dilatation est $2,2 \times 10^{-5}$ et la bague extérieure est un acier dont le coefficient de dilatation est $1,1 \times 10^{-5}$.

De plus, l'effort limite de déformation élastique du matériau de la bague intérieure 1 devra être inférieur à l'effort limite de déformation élastique de la bague extérieure. Cette caractéristique est nécessaire à la mise en œuvre du procédé de fabrication préférentiel du palier.

La bague extérieure 2 possède une gorge périphérique 3 dans laquelle débouchent les conduits tels que 41, 42, 43, 44 d'introduction du fluide dans le palier, à partir d'un orifice d'alimentation 5 porté par un support annulaire 6. L'alésage 7 du support reçoit la bague extérieure 2 de sorte que la gorge 3 de celle-ci délimite avec la surface de l'alésage 7 une chambre d'alimentation 8 du palier.

A titre d'exemple, les conduits 41, 42, 43, 44 sont portés par des bouchons 10 montés dans la paroi de la bague extérieure.

L'évidement biconique de la bague intérieure 1 est utilisé pour le montage d'une bague élastique 11 à ailettes qui constitue un moyen de freinage de la bague intérieure 1 lorsque celle-ci est soumise à une vitesse de rotation trop élevée.

L'exemple d'application du palier représenté à la figure 2 est celui d'une machine textile qui possède une bobine tournante 20 qui enroule le fil 21 provenant d'une bobine primaire non représentée. Le fil 21 est engagé dans le crochet 22 solidaire de la bague intérieure 1. La tension exercée sur le fil 21 par la bobine tournante 20 met le crochet 22 et par voie de conséquence la bague intérieure 1 en rotation.

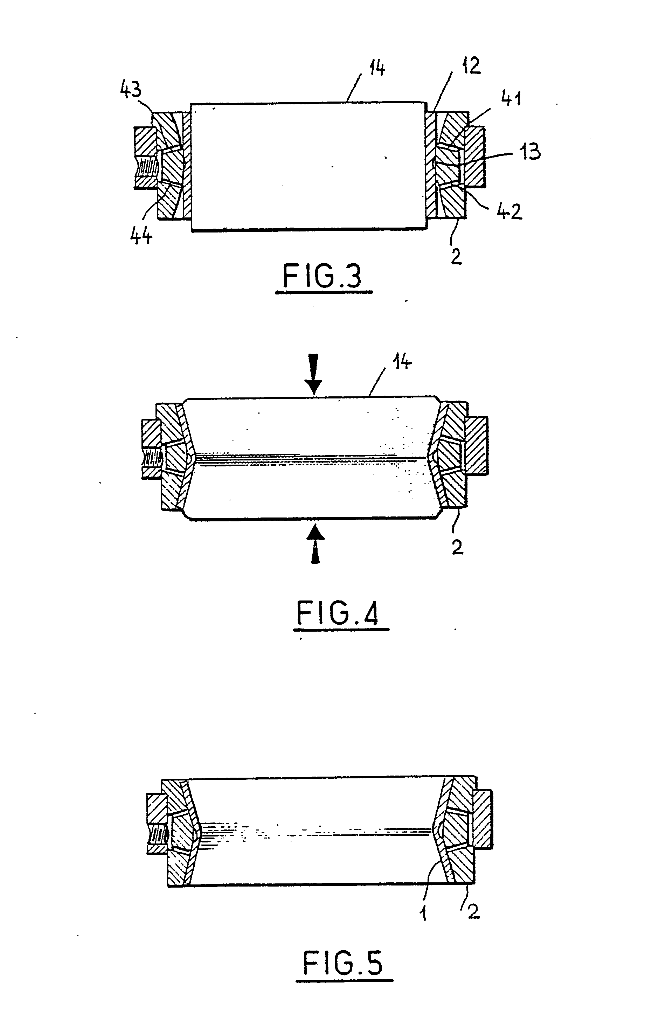

La fabrication du palier conforme à l'invention procède de préférence des figures 3 à 5, bien que d'autres procédés conventionnels tels que l'emboutissage puissent être employés.

Selon la figure 3, l'ébauche de la bague intérieure est constituée par une douille 12 qui possède une gorge de centrage extérieure 13 située dans la partie médiane de la douille. La douille 12 est montée sur un mandrin déformable en matière plastique 14 et l'ensemble constitué par la douille 12 et le mandrin 14 est introduit et centré dans la bague extérieure 2 portant les conduits 41, 42, 43, 44.

Selon la figure 4, on comprime axialement le mandrin 14 dans le but de lui conférer une expansion radiale au cours de laquelle la douille 12 se déforme radialement et prend la configuration de la portée biconique de la bague extérieure 2.

Pour la mise en œuvre de cette phase du procédé, on choisira par exemple une douille en alliage d'aluminium de 2 mm d'épaisseur et d'un diamètre extérieur de 60 mm.

L'ensemble des bagues après leur mise en forme est porté à une température telle que la dilatation différentielle des deux bagues 1 et 2 provoque une déformation permanente de la bague intérieure 1. Pour les coefficients de dilatation précités, la température de chauffe est voisine de 200 °C.

En règle générale, la température de chauffe employée permettra d'obtenir, d'après les coefficients de dilatation différents des matériaux en présence, une déformation permanente radiale de la bague intérieure par dépassement de la déformation élastique de celle-ci. On réalise ainsi un jeu de fonctionnement du palier (environ 0,02 mm) lors du refroidissement de l'ensemble des bagues.

## Revendications

1. Palier radial et de butée supporté par un fluide, à surface de portée en forme de cône, qui possède une bague intérieure (1) de forme biconique montée à rotation dans une bague extérieure (2) de configuration correspondante, et des conduits (41, 42, 43, 44) d'introduction du fluide dans le palier à partir d'un orifice d'alimentation (5) débouchant sur des surfaces de portée desdites bagues (1, 2), caractérisé par le fait que la bague intérieure (1) d'un seul tenant possède une forme obtenue par déformation dans la bague extérieure (2), d'une douille cylindrique (12) de faible épaisseur dont le coefficient de dilatation est plus grand que celui de la bague extérieure (2) et dont l'effort limite de déformation élastique est inférieur à celui de ladite bague (2).

2. Palier selon la revendication 1, caractérisé par le fait que la surface de portée de la bague intérieure (1) porte une rainure de centrage (13) et que les conduits d'introduction (41, 42, 43, 44) du fluide dans le palier sont portés par des bouchons (10) rapportés sur ladite bague extérieure.

3. Palier selon la revendication 2, caractérisé par le fait que la bague intérieure (1) porte un moyen de freinage rapporté constitué par une bague élastique à ailettes (11).

4. Procédé de fabrication d'un palier radial et de butée selon la revendication 1, caractérisé par le fait que :
— la bague intérieure en forme de douille d'épaisseur faible est montée sur un mandrin déformable en matière plastique ;
— l'ensemble douille (12)-mandrin (14) est introduit dans la bague extérieure (2) ;
— le mandrin (14) est axialement comprimé et subit une expansion radiale qui déforme la douille (12) radialement qui prend la configuration de la portée biconique de la bague extérieure (2) ;
— l'ensemble de la bague extérieure et de la bague intérieure est porté à une température de dilatation correspondant à une déformation permanente de la bague intérieure ;
— le jeu de fonctionnement du palier entre la bague extérieure et la bague intérieure est obtenu par refroidissement de l'ensemble des deux bagues.

## Claims

1. A fluid-supported radial and thrust bearing having a bearing surface of conical shape, which has an internal ring (1) of biconical shape mounted rotatably in an external ring (2) of corresponding configuration, and ducts (41, 42, 43, 44) for introducing the fluid into the bearing from a feed orifice (5), opening on to bearing surfaces of said rings (1, 2), characterised in that the internal ring (1) in its entirety is of a shape produced by deformation in the external ring (2) of a cylindrical sleeve (12) of small thickness, the coefficient of expansion of which is greater than that of the external ring (2) and whose elastic limit is lower than that of said ring (2).

2. A bearing according to claim 1 characterised in that the bearing surface of the internal ring (1) carries a centering groove (13) and that the ducts (41, 42, 43, 44) for introducing the fluid into the bearing are carried by plugs (10) which are fitted to said external ring.

3. A bearing according to claim 2 characterised in that the internal ring (1) carries a braking means fitted thereto, comprising a resilient ring (11) having blade portions.

4. A process for producing a radial and thrust bearing according to claim 1 characterised in that :
— the internal ring in the form of a sleeve of small thickness is mounted on a deformable mandrel of plastics material ;
— the assembly of the sleeve (12) and the mandrel (14) is introduced into the external ring (2) ;
— the mandrel (14) is axially compressed and undergoes radial expansion which radially deforms the sleeve (12) which assumes the configuration of the biconical bearing surface of the external ring (2) ;
— the assembly of the external ring and the internal ring is raised to an expansion temperature corresponding to permanent deformation of the internal ring ; and
— the operating clearance of the bearing between the external ring and the internal ring is produced by cooling of the assembly of the two rings.

## Patentansprüche

1. Hydrostatisches Radial-Axial-Lager mit einer konischen Lagerfläche, das einen inneren, doppelkegelförmigen Ring (1) besitzt, der drehbar in einem äußeren Ring (2) angepaßter Ausgestaltung angeordnet ist, sowie Leitungen (41, 42, 43, 44) zur Fluidzufuhr in das Lager von einer Versorgungsöffnung (5) aus besitzt, welche an den Lagerflächen der Ringe (1, 2) münden, dadurch gekennzeichnet, daß der innere einstückige Ring (1) eine Form besitzt, die durch Deformation im äußeren Ring (2), einer zylindrischen Buchse (12) geringer Dicke erhalten wird, deren Ausdehnungskoeffizient größer ist als derjenige des äußeren Rings (2) und deren Grenzbelastung an elastischer Deformation kleiner ist als diejenige des Ringes (2).

2. Lager nach Anspruch 1, dadurch gekennzeichnet, daß die Lagerfläche des inneren Rings (1) eine Zentriernut (13) trägt und daß die Leitungen (41, 42, 43, 44) zur Fluidzufuhr in das Lager von Stopfen (10) getragen werden, die am äußeren Ring eingesetzt sind.

3. Lager nach Anspruch 2, dadurch gekennzeichnet, daß der innere Ring (1) eine eingesetzte Bremsanordnung trägt, die aus einem elastischen Flügelring (11) besteht.

4. Verfahren zur Herstellung eines Radial-Axial-Lagers nach Anspruch 1, dadurch gekennzeichnet, daß

— der buchsenförmige innere Ring geringer Dicke auf einer deformierbaren Spindel aus Kunststoff angeordnet wird ;

— die Anordnung aus Buchse (12) — Spindel (14) in den äußeren Ring (2) eingeführt wird ;

— die Spindel (14) axial komprimiert wird und eine radiale Expansion durchführt, welche die Buchse (12) radial verformt, welche die doppelkegelförmige Lagerflächengestalt des äußeren Ring (12) annimmt ;

— die Anordnung aus äußerem Ring und innerem Ring auf eine Ausdehnungstemperatur gebracht wird, die einer dauerhaften Deformation des inneren Rings entspricht und

— das Betriebsspiel des Lagers zwischen dem äußeren Ring und dem inneren Ring durch Abkühlung der Anordnung aus den beiden Ringen erhalten wird.

FIG.1

FIG.2

FIG.3

FIG.4

FIG.5